# EUROPEAN PATENT APPLICATION

(11) **EP 1 768 019 A2**
(43) Date of publication of application: **28.03.2007**
(21) Application number: 06254752.6
(22) Date of filing: 13.09.2006
(51) Int. Cl.: G06F 3/12

(54) **Network printing method and computer program product**

(30) Priority: 13.09.2005 JP 2005265801; 04.08.2006 JP 2006213902
(71) Applicant: Ricoh Company, Ltd., Tokyo 143-8555 (JP)
(72) Inventor: Nagahara, Takanori, Ricoh Co., Ltd., Tokyo 143-8555 (JP); Asai, Takahiro, Ricoh Co., Ltd., Tokyo 143-8555 (JP)
(74) Representative: Mounteney, Simon James

(57) **Abstract**

A printing device generates print request data including print attribute data for printing based on an input print request and transmits the print request data to a print-data generating device via a network. The print-data generating device generates response data and transmits the response data to the printing device during the same session of receiving the print request data from the printing device. The printing device receives the response data and transmits a print data request to the print-data generating device. The print-data generating device receives the print data request, generates print data according to the print data request, and transmits the generated print data to the printing device.

## Description

### BACKGROUND OF THE INVENTION

### 1. Field of the Invention

The present invention relates to network printing systems and, in particular, to a network printing method and a computer program product in which, upon request from a portable terminal, a printing device obtains print data from a server device for printing.

### 2. Description of the Related Art

Portable terminals, such as cellular phones, Personal Handyphone System (PHS) phones, and Personal Data Assistants (PDAs), do not include a printing function. One scheme to print data stored in a portable terminal is to output the data in the portable terminal directly to a printing device for printing. In this scheme, data for a small screen of a portal terminal and data for a small memory capacity are the only data that can be printed. Also, since a printer driver does not have a high performance, high-quality printing cannot be made.

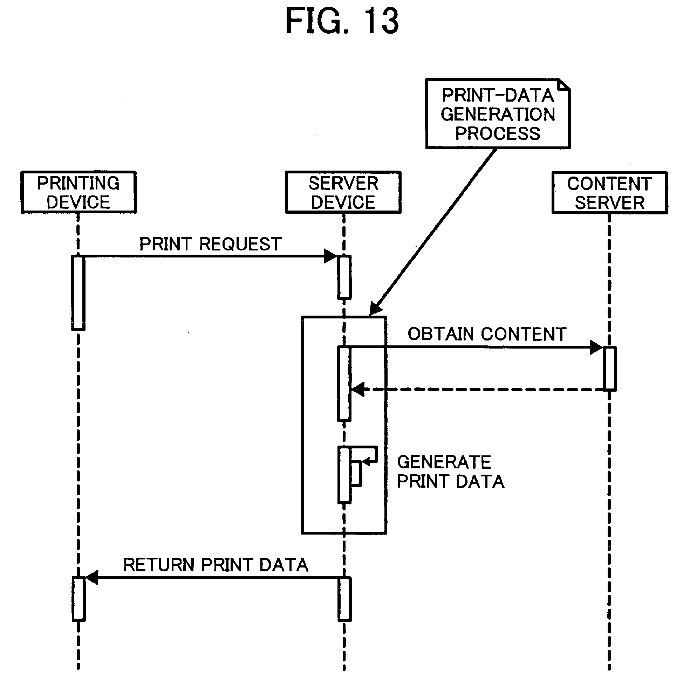

To get around this problem, there is a printing system in which data of a portable terminal or data specified by a portable terminal is output to a printing device via a network. If the portable terminal does not hold print data, the Uniform Resource Locator (URL) of data desired to be printed is specified, for example, thereby instructing the printing device to print. As shown in Fig. 13, the printing device gives a request instruction of printing that data to a server device on the network. The server device then obtains a content from a content server. The server device then generates print data for the content, and then the printing device downloads the print data from the server device for printing.

Also, as a standard scheme regarding a printing instruction to the printing device, the Print Services Interface (PSI) Standard laid down by the Printer Working Group (PWG) of Institute of the Electrical and Electronics Engineers (IEEE). In the PSI standard, there is a scheme for convenient printing by providing a printing instruction including a URL to the printing device. Several examples of the conventional technology regarding a printing instruction to the printing device are described below.

The "image display printing method" disclosed in Japanese Patent Application Laid-Open No. 2001-256025 is a printing method of high-quality printing of information referred to by a cellular phone, and then billing. From the cellular phone, a printing instruction including a URL is reported to a printing device. As such, this is a printing system that allows easy printing by operating a terminal the user is using in everyday life. In this system, a printing device is placed in an environment, such as a convenience store, so as to be operable by the public. A data terminal of a cellular phone is connected to a communication control unit of the printing device via a cable. When a home page displayed on a display unit of the cellular phone is desired to be printed, its URL is reported to the printing device. From the reported URL, the printing device determines a URL in which a high-quality image is stored, reads a page containing the high-quality image to be printed, and then prints the read page.

The "printing system" disclosed in Japanese Patent Application Laid-Open No. 2002-014781 is a printing system in which, according to a printing instruction from a portable device, a printing device sends a data obtaining request to a server device, and the server device then transmits print data to the printing device for printing. To print content information obtained through the Internet, the portable terminal device reports via local communication to the printing device a printing instruction with a URL of the content information being specified. In response to this printing instruction, the printing device specifies a URL for display, and then reports a print data request to the server device through the Internet. In response to this request, the server device obtains print data from the specified URL. A Print Markup Language (PML) converting unit then performs conversion to PML data, and then transmits the converted data to the printing device through the Internet. When the printing device receives the PML data, a PML printing unit in the printing device performs conversion to print data for printing.

However, in the conventional printing systems, there are some problems as follows. In a system where a content obtained upon a printing instruction from a portable terminal is developed at a printing device as print data, networking printing cannot be performed by a printing device without a developing function. Moreover, in a system for printing print data described in a PML format, print data described in a language other than a printer description language assumed in the server device cannot be printed. Furthermore, since the printing device cannot know the state of print data generation in the server device, if it takes a long time to generate print data at the server device, a printing timeout occurs at the printing device, thereby making it impossible to produce a print output. Still further, in the PSI standard for printing by specifying a URL, only the application programming interface (API) for communications is defined, and no specific scheme for actual print output is clearly defined.

### SUMMARY OF THE INVENTION

It is an object of the present invention to at least partially solve the problems in the conventional technology.

According to an aspect of the present invention, a network printing method to be executed in a network printing system with a printing device and a print-data generating device being connected via a network includes in the printing device, according to an input print request, generating print request data including print attribute data for printing; in the printing device, transmitting the print request data to the print-data generating device; in the print-data generating device, receiving the print request data from the printing device; in the print-data generating device, generating response data; in the print-data generating device, transmitting the response data to the printing device during the same session of receiving the print request data; in the printing device, receiving the response data for the print request data from the print-data generating device; in the printing device, transmitting a print data request to the print-data generating device according to the response data; in the print-data generating device, receiving the print data request from the printing device; in the print-data generating device, generating print data according to the print data request; in the print-data generating device, transmitting the generated print data to the printing device; and in the printing device, receiving the print data returned from the print-data generating device for the print data request.

According to another aspect of the present invention, a computer program product executable by a computer and having a computer-readable recording medium including a plurality of instructions for printing data in a network printing system with a printing device and a print-data generating device being connected via a network, the instructions causing the computer to execute according to an input print request, generating print request data including print attribute data for printing; transmitting the print request data to the print-data generating device; receiving response data for the print request data from the print-data generating device; transmitting a print data request to the print-data generating device according to the response data; and receiving the print data returned from the print-data generating device for the print data request.

According to still another aspect of the present invention, a computer program product executable by a computer and having a computer-readable recording medium including a plurality of instructions for printing data in a network printing system with a printing device and a print-data generating device being connected via a network, the instructions causing the computer to execute receiving print request data including print attribute data for printing from the printing device; generating response data for the print request data; transmitting the response data to the printing device during a same session of receiving the print request data; receiving the print data request from the printing device; generating print data according to the print data request; and transmitting the generated print data to the printing device.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a diagram of the concept of the configuration of a network printing system according to a first embodiment of the present invention;
Fig. 2 is a drawing of print request data for use in the network printing system according to the first embodiment of the present invention;
Fig. 3 is a drawing of a setting screen on a cellular phone for use in the network printing system according to the first embodiment of the present invention;
Fig. 4 is a flowchart of an operation procedure in the network printing system according to the first embodiment of the present invention;
Fig. 5 is a flowchart of an operation procedure in a network printing system according to a second embodiment of the present invention;
Fig. 6 is a flowchart of an operation procedure in a network printing system according to a third embodiment of the present invention;
Fig. 7 is a diagram of the concept of the configuration of a network printing system according to a fourth embodiment of the present invention;
Fig. 8 is a flowchart of an operation procedure in the network printing system according to the fourth embodiment of the present invention;
Fig. 9 is a flowchart of an operation procedure in a network printing system according to a fifth embodiment of the present invention;
Fig. 10 is a diagram of the concept of the configuration of a network printing system according to a sixth embodiment of the present invention;
Fig. 11 is a flowchart of an operation procedure in the network printing system according to the sixth embodiment of the present invention;
Fig. 12 is a flowchart of an operation procedure in a network printing system according to a seventh embodiment of the present invention; and
Fig. 13 is a flowchart of a printing procedure in a conventional network printing system.

### DETAILED DESCRIPTION OF THE PREFERRED EMBODIMENTS

Exemplary embodiments for implementing the present invention are described in detail below with reference to the drawings.

A first embodiment is directed to a network printing system in which a printing device connected to a server device via a network generates, according to an input print request, print request data including print attribute data for transmission to the server device, the server device generates print data according to the received print request data for transmission to the printing device, and then the printing device receives the print data for printing. Here, in all of the following embodiments, a printing device is a piece of equipment with a printing function, for example, a printer device and a multifunction product with a printer function, a copy function, a scanner function, and a facsimile function included in one box.

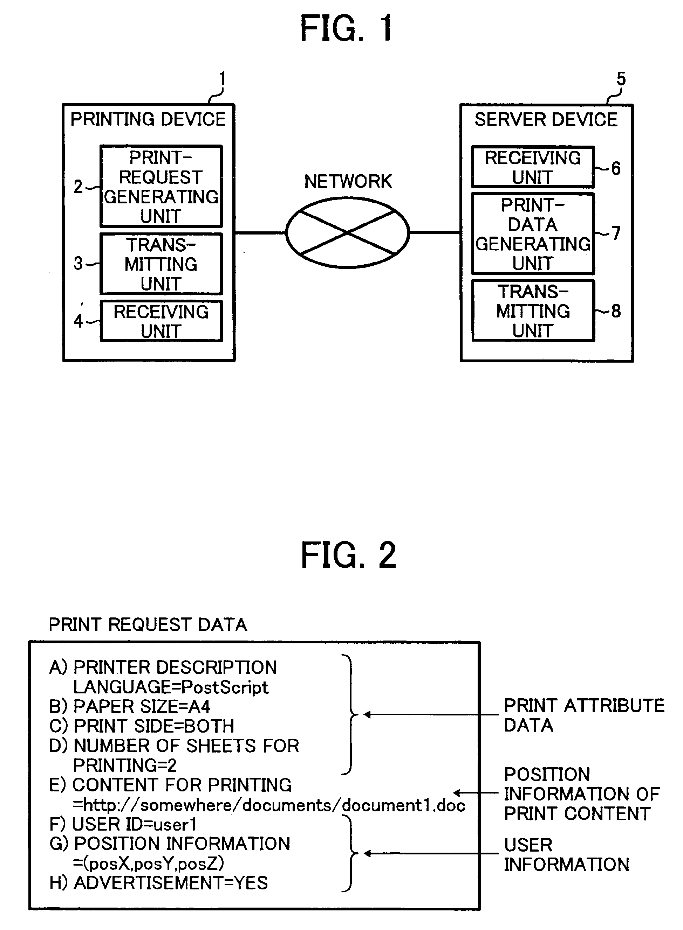

Fig. 1 is a diagram of the concept of the configuration of the network printing system according to the first embodiment of the present invention. In Fig. 1, a printing device 1 is a device that generates, according to a print request, print request data including print attribute data for transmission to the server device, and then receives print data for printing. The printing device 1 includes, according to the print request, a print-request generating unit 2 that generates print request data including print attribute data for printing, a transmitting unit 3 that transmits the print request data to the server device, and a receiving unit 4 that receives print data in return for the print request data.

A server device 5 is a device that receives the print request data, generates print data according to the print request data, and then transmits the print data to the printing device. The server device 5 includes a receiving unit 6 that receives the print request data, and a print-data generating unit 7 that generates print data according to the print request data, and a transmitting unit 8 that transmits the print data to the printing device 1.

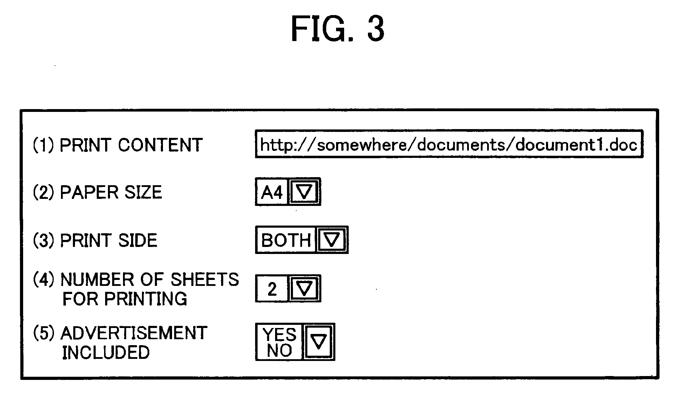

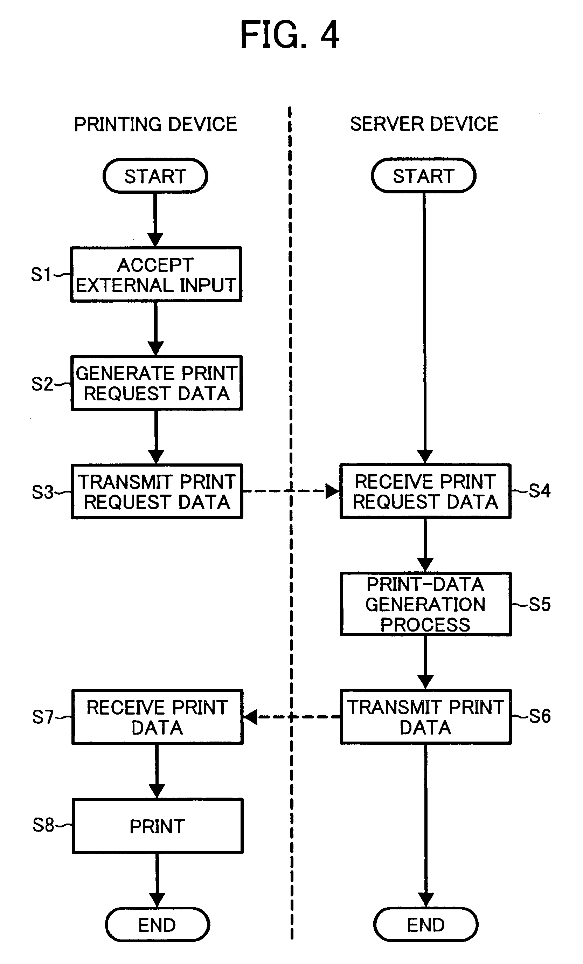

Fig. 2 is a drawing of the print request data. Fig. 3 is a drawing of a setting screen on a cellular phone. Fig. 4 is a flowchart of an operation procedure in the network printing system.

The function and operation of the network printing system configured according to the first embodiment is described. First, with reference to Fig. 1, the function of the network printing system is schematically described. The printing device 1 transmits a print request including print attribute data to the server device 5. The server device 5 then generates print data according to the print attribute data. The printing device 1 then prints the print data. With this, printing can be performed according to the printing format (for example, PostScript or Printer Control Language (PCL)) allowable in the printing device 1.

The printing device 1 includes an infrared communication device, a wireless communication device, or a Radio Frequency IDentification (RFID) reading unit. A user uses a portable terminal including an infrared communication device, a wireless communication device, or an RFID device to issue a print request to the printing device 1. The portable terminal may be a cellular phone, a portable personal computer, or a Personal Digital Assistant (PDA). Wireless communication may be achieved through Bluetooth, a wireless Local Area Network (LAN) typified by IEEE 802.11b, or other short-distance wireless communication. The print-request generating unit 2 of the printing device 1 generates print request data including print attribute data for printing according to the print request. The transmitting unit 3 transmits the print request data to the server device 5.

The receiving unit 6 of the server device 5 receives the print request data. The print-data generating unit 7 generates print data according to the print request data. The transmitting unit 8 transmits the print data to the printing device 1. The receiving unit 4 of the printing device 1 receives the print data in return for the print request data during the same session as that for receiving the print request data. The printing device 1 then prints the received print data. Here, the server device 5 may generate print data depending on the connection of the printing device 1 to the server device 5 for receiving the print data. With this, print data is generated at the time of connection to the server device 5 in a print-data obtaining process at the printing device 1. Therefore, compared with the case of generating print data in advance at the time of print request, generation of unnecessary print data can be prevented, thereby reducing a process load on the server device 5.

Next, the print request data is described with reference to Figs. 2 and 3. The print attribute data includes printer-description-language (PostScript, Portable Document Format (PDF), PCL, etc.) selection information for use in the printing device 1. If the printer-description-language selection information includes equal to or more than two types of language specified, the language specified at the top is selected as default: Also, the print attribute data may contain print setting values, such as print size, color/monochrome, print side (both side/one side), combination format, and the number of sheets for printing. Also, the print attribute data may contain data associated with control at the printing device.

The print request data may contain print attribute data, identification information for a print content, and a print content itself. The identification information is represented by a Uniform Resource Identifier (URI) or URL. In the case of a URL, to specify print data of document1.doc in a path of documents in a server device of somewhere, the print data is specified in the form of http://somewhere/documents/document1.doc. Also, the print request data may contain user's preference information, physical location information, information about whether to add advertisement, and information about billing. Also, the data description format included in the print request data may be described in a structured format, such as extensible Markup Language (XML), or may be described in a non-structured format, such as in a text format.

The print-data generating unit 7 may obtain a print content based on Hyper Text Transfer Protocol (HTTP) or File Transfer Protocol (FTP), for example. The print request data may be input from a device external to the printing device (such as a cellular phone, PDA, or notebook personal computer (PC)). A setting screen when a cellular phone is used as an input unit is depicted in Fig. 3. Also, the print-data generating unit 7 may obtain print data from a storage device storing database or the like inside the server device 5. The network for use in connecting the printing device 1 and the server device 5 together may partially include an intranet or the Internet. The transmitting unit 8 and the receiving unit 6 may be the same device. A server device that receives print request data and a server device that transmits print data may be different from each other.

Next, with reference to Figs. 2, 3, and 4, the operation procedure of the network printing system is described. First, when a user uses an external input device to input print request data, the printing device 1 accepts the input from the input device (step S1). The external input device is a cellular phone, PDA, or notebook PC. In the following, an example is described in which a cellular phone is used as an external input device. The user operates the cellular phone to input, as content identification information, http://somewhere/documents/document1.doc in a text format, as shown in (1) of Fig. 3. As shown in (2) of Fig. 3, A4 is selected as paper size. As shown in (3) of Fig. 3, "both sides" is selected as printing side. As shown in (4) of Fig. 3, 2 is selected as the number of sheets for printing. As shown in (5) Fig. 3, "Yes" is selected for allowing inclusion of advertisement. In this manner, upon input of the print request data to the printing device 1, the printing device 1 accepts the input.

Then, based on the input, the printing device 1 generates print request data as depicted in Fig. 2 (step S2). Next, the print request data is transmitted to the server device (step S3). The server device 5 then receives the print request data from the printing device 1 (step S4). The server device 5 then generates print data (step S5). In the print-data generation process, from the URL of the identification information for the print content in the print request data (http://somewhere/documents/document1.doc) as shown in E of Fig. 2, documentl.doc in the path of documents in the server device of somewhere is obtained, and is then temporarily stored. Then, based on the printer-description-language selection information in the print attribute data as shown in A of Fig. 2, PostScript as default is selected.

Next, as shown in B of Fig. 2, A4 is set as paper size. As shown in C of Fig. 2, "both sides" is set as printing side. As shown in D of Fig. 2, 2 is set as the number of sheets for printing. In this manner, from the temporarily stored document1.doc, its PostScript data (document1.ps) is generated.

The server device 5 then transmits the generated print data (document1.ps) to the printing device 1 (step S6). The printing device 1 then receives this print data (document1.ps) from the server device 5 (step S7), and the printing device 1 then prints the received print data (document1.ps) (step S8). Here, processes from transmission of a print request data at step S2 to reception of print data at step S6 can be performed during the same connection (session). In this scenario, in the case of HTTP, according to the print request data transmitted from the printing device, a response with a status code (200 OK) contained in a header portion and print data (document1.ps) contained in a body portion is returned from the server device.

In this manner, the print request having the print attribute data including the printer-description-language selection information, and the identification information for the print content is transmitted to the server device, and the server device generates print data from the print attribute data. With this, a network printing system can be achieved in which a print data format, such as PostScript or PCL, suited for the printing device can be obtained for printing.

As described above, in the first embodiment, the network printing system is configured such that the printing device connected to the server device via a network generates, according to an input print request, print request data including print attribute data for transmission to the server device, the server device generates print data according to the received print request data for transmission to the printing device, and then the printing device receives the print data for printing. With this, reliable print data can be quickly obtained according to a user's request and can be printed conveniently and efficiently.

Next, a second embodiment according to the present invention is described.

The second embodiment is directed to a network printing system in which a printing device connected to a server device via a network generates, according to a print request, print request data including print attribute data for printing and transmits the print request data to the server device, the server device generates response data according to the received print request data for transmission, the printing device receives the response data and transmits a print data request, the server device generates print data for transmission, and then the printing device receives the print data for printing.

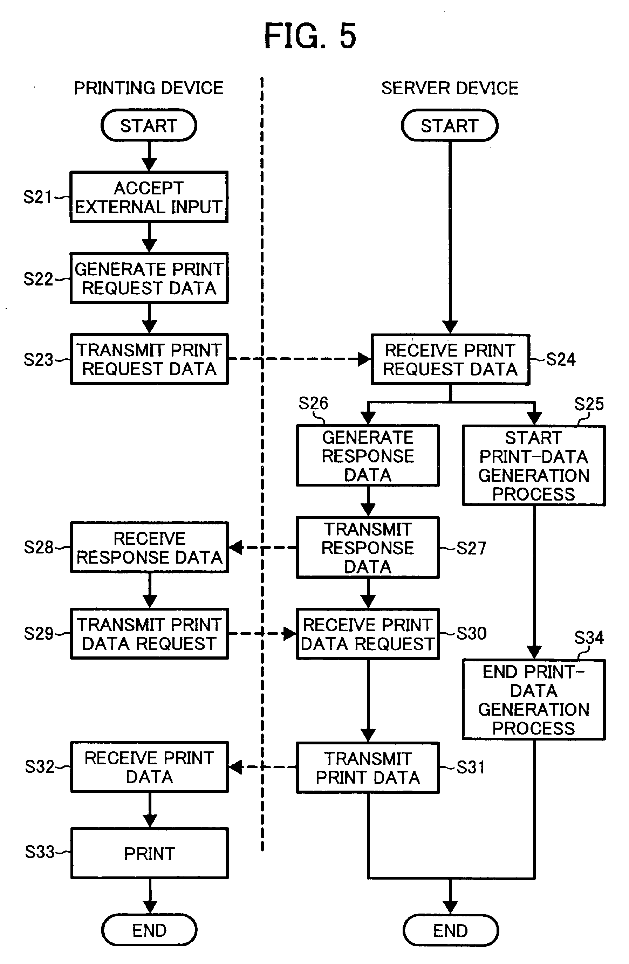

Fig. 5 is a flowchart of an operation procedure in the network printing system according to the second embodiment. A server device includes a response data generating unit that generates response data in return for print request data. Other than that, the basic structure of the network printing system according to the second embodiment is similar to that in the first embodiment.

The function and operation of the network printing system configured as described above according to the second embodiment is described. The server device transmits, during the same connection (session) as that for reception of print request data, transmits response data to the printing device. In response to the response data, the printing device obtains print data. The response data may contain identification information for the print data. The identification information is represented by a URI, for example, or may be represented by URL, for example. In the case of a URL, to specify print data of document1.ps in a path of documents in a server device of somewhere, the print data is specified in the form of http://somewhere/documents/documentl.ps. Also, the response data may contain status data indicative of the state of print data generation and a time required for print data generation.

Reception of the print request data and transmission of the response data are performed during the same connection (session). For example, in the case of HTTP, according to the print request data transmitted from the printing device, a response with a status code (202 Accepted) contained in a header portion and the print data of (http://somewhere/documents/document1.ps) contained in a body portion is returned from the server device. The print data may be obtained based on HTTP or FTP, for example. If the print data is obtained based on HTTP, document1.ps is obtained according to the URL (http://somewhere/documents/document1.ps) in the response data. A server device that transmits response data and a server device that transmits print data may be different from each other.

With reference to Fig. 5, the operation procedure of the network printing system is described. Processes from step S21 to step S25 are performed in a manner similar to that for the processes from steps S1 to S5 in the first embodiment.

When the server device 5 receives the print data request from the printing device 1 (step S24), the following response-data generation process and print-data generation process are concurrently performed.

First, in the response-data generation process, response data containing URL (http://somewhere/documents/document1.ps) as the identification information for the print data to be generated (document1.ps) is generated (step S26). The generated response data is then transmitted to the printing device 1 (step S27).

On the other hand, in the server device 5, a print-data generation process is concurrently started (step S25).

The printing device 1 receives at step S27 the response data transmitted from the server device 5 (step S28). The printing device 1 then transmits a print data request to the server device 5 to obtain document1.ps in the path of documents in the server device 5 of somewhere, from the URL (http://somewhere/documents/document1.ps) contained in the response data (step S29).

The server device 5 receives the print data request transmitted from the printing device 1 (step S30). Upon completion of the print-data generation process performed concurrently with the response-data generation process (step S34), the server device 5 transmits the generated print data to the printing device 1 (step S31).

The printing device 1 receives the print data transmitted from the server device 5 as a response to the request (step S32). The printing device 1 then prints the received print data (step S33).

In this manner, even if the size of the print data is large and its generation at the server device takes a long time, the print data can be obtained at a timing desired by the user, while avoiding a printing error due to the occurrence of a connection timeout.

As described above, in the second embodiment, the network printing system is configured such that a printing device connected to a server device via a network generates, according to a print request, print request data including print attribute data for printing and transmits the print request data to the server device, the server device generates response data for the received print request data for transmission, the printing device receives the response data and transmits a print data request, the server device generates print data for transmission, and then the printing device receives the print data for printing. With this, reliable print data can be quickly obtained according to a user's request timing and can be printed conveniently and efficiently.

Next, a third embodiment according to the present invention is described.

The third embodiment is directed to a network printing system in which a printing device connected to a server device via a network generates, according to a print request, print request data including print attribute data for printing and transmits the print request data to the server device, the server device generates response data for the received print request data for transmission and also starts a print-data generation process, the printing device receives the response data and transmits a print data request, the server device transmits print data if generated, and the printing device retransmits a print data request if unable to receive the print data, and upon receiving the print data, prints the print data.

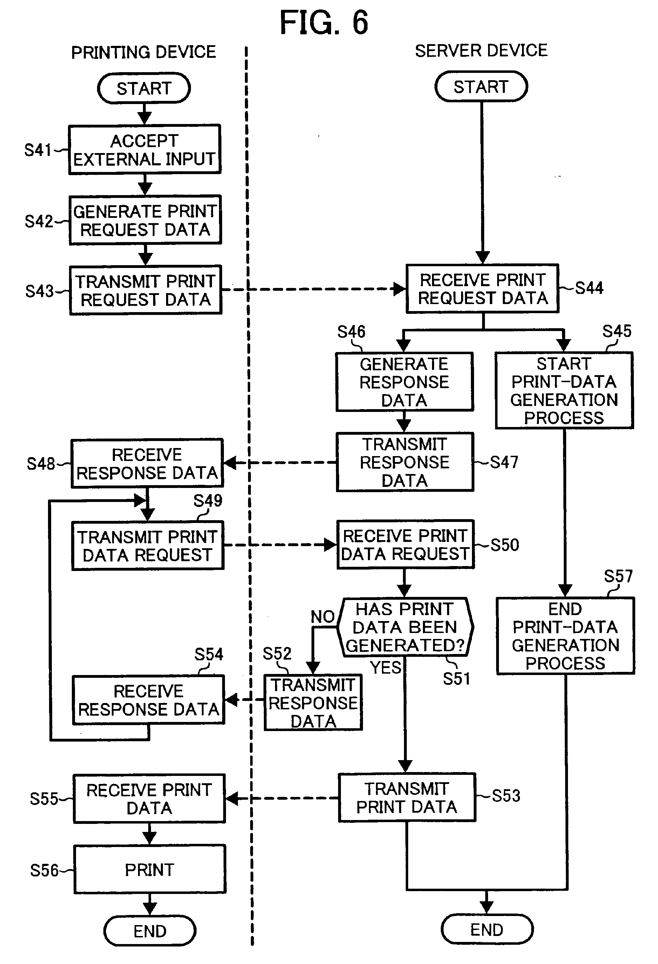

Fig. 6 is a flowchart of an operation procedure in the network printing system according to the third embodiment of the present invention. The printing device includes a unit that tries to connect again to the server device if the unit fails to obtain the print data. Other than that, the basic structure of the network printing system according to the third embodiment is similar to that in the second embodiment.

The function and operation of the network printing system configured as described above according to the third embodiment is described. The printing device asynchronously tries to obtain print data and the server device in turn makes a response during the same connection, thereby achieving dynamic printing control according to the state of the server device. When failing to obtain print data, the printing device tries to again connect to the server device. When a connection is successfully established, the print data is obtained.

With reference to Fig. 6, the operation procedure of the network printing system is described. Processes from step S41 to step S48 are performed in a manner similar to that for the processes up to step S28 in the second embodiment.

Upon reception of the response data from the server device 5 (step S48), the printing device 1 transmits a print data request to the server device 5 to obtain print data (step S49).

The server device 5 then receives the print data request transmitted from the printing device 1 (step S50). The server device 5 then determines whether the print-data generation process concurrently performed with the response-data generation process has ended (step S57) and print data has been generated (step S51). If print data has been generated ("Yes" at step S51), the server device 5 transmits the generated print data to the printing device 1 (step S53). On the other hand, if the print-data generation process has not yet ended and no print data is generated ("No" at step S51), response data with a status code (102 processing) contained in a head portion is transmitted to the printing device 1 (step S52).

Upon receiving the response data in response to the print data request with a status code (102 processing) contained in a head portion (step S54), the printing device 1 retransmits a print data request (step S49).

On the other hand, if the printing device 1 receives print data in response to the print data request (step S55), the printing device 1 prints the received print data (step S56).

In this manner, if the printing device fails to obtain print data, the printing device tries to connect again to the server device. By repeating this process of trying to connect to the server device until print data is obtained, reliable print data obtainment can be achieved.

As described above, in the third embodiment, the network printing system is configured such that a printing device connected to a server device via a network generates, according to a print request, print request data including print attribute data for printing and transmits the print request data to the server device, the server device generates response data for the received print request data for transmission and also starts a print-data generation process, the printing device receives the response data and transmits a print data request, the server device transmits print data if generated, and the printing device retransmits a print data request if unable to receive the print data, and upon receiving the print data, prints the print data. With this, reliable print data can be quickly obtained according to a user's request and can be printed conveniently and efficiently.

Next, a fourth embodiment according to the present invention is described.

The fourth embodiment is directed to a network printing system in which a printing device connected to a server device via a network generates, according to a print request, print request data including print attribute data for printing and transmits the print request data to the server device, the server device generates response data for the received print request data for transmission and also starts a print-data generation process, the printing device receives the response data and transmits a print data request, the server device transmits print data if generated, the printing device receives the print data for printing, and if unable to receive the print data, retransmits a print data request, and if the number of times of request has reached an upper limit, stops requesting.

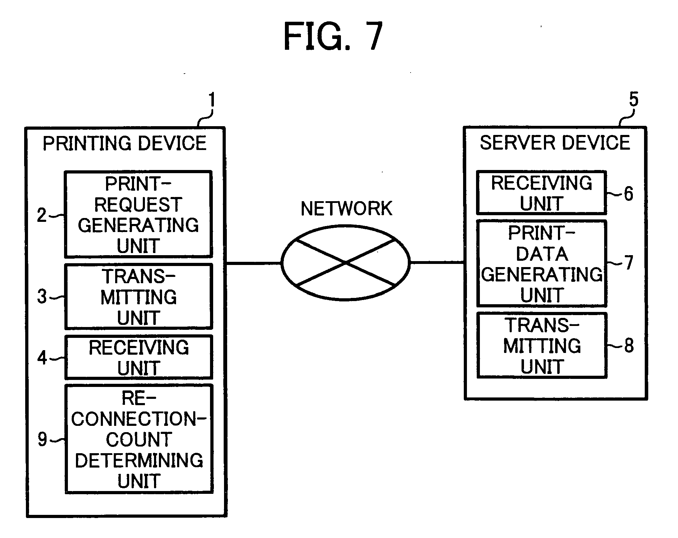

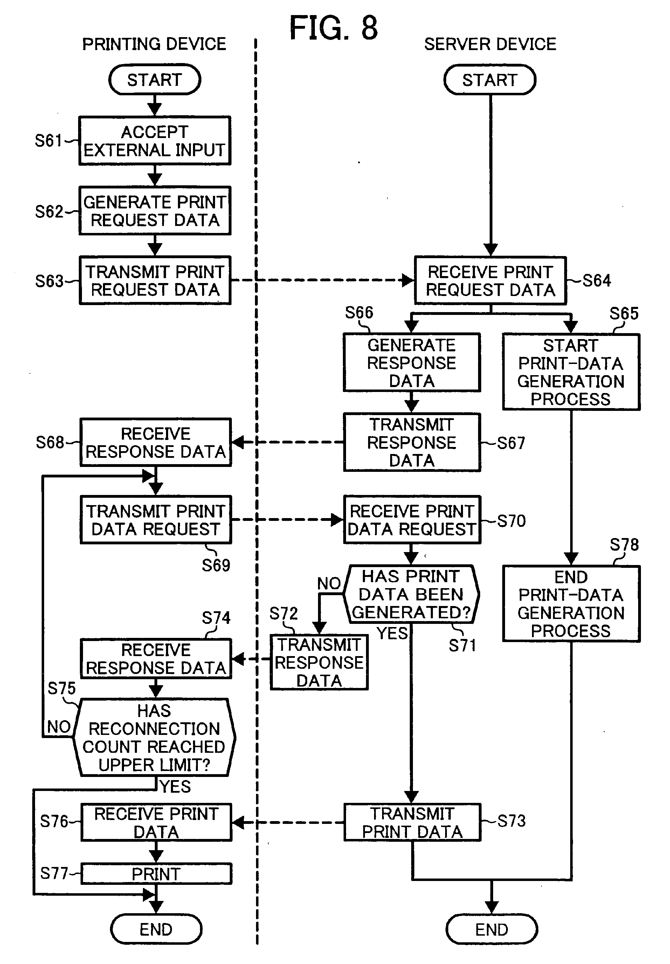

Fig. 7 is a diagram of the configuration of the network printing system according to the fourth embodiment. In Fig. 7, a reconnection-count determining unit 9 is a device that determines whether the number of times of transmitting a print data request has reached an upper limit value set in advance. Other than that, the basic structure of the network printing system according to the fourth embodiment is similar to that in the third embodiment. Fig. 8 is a flowchart of an operation procedure in the network printing system.

The function and operation of the network printing system configured as described above according to the fourth embodiment is described. When the printing device fails to obtain print data, the printing device tries to again connect to the server device. When a connection is successfully established, the print data is obtained. When it is determined by the reconnection-count determining unit that the number of times of reconnection has reached an upper limit, the printing device stops transmitting the print request data.

With reference to Fig. 8, the operation procedure of the network printing system is described. Processes from step S61 to step S68 are performed in a manner similar to that for the processes from steps S41 to S48 in the third embodiment. Also, the process at the server device 5 side is performed similarly to the process in the third embodiment.

Upon receiving the response data from the server device 5 (step S68), the printing device 1 transmits a print data request for obtaining print data to the server device 5 (step S69). Upon receiving response data with a status code of "102 Processing" in response to the transmitted print data request (step S74), the printing device 1 determines whether the number of times of reconnection (the number of times of transmitting requests) to the server device 5 has reached an upper limit (step S75).

If the number of times of reconnection (the number of times of transmitting a request) to the server device 5 has reached the upper limit ("Yes" at step S75), the printing device 1 stops the process of connecting to the server device 5. On the other hand, if the number of times of reconnection (the number of times of transmitting a request) to the server device 5 has not reached the upper limit ("No" at step S75), the printing device 1 transmits again a print data request (step S69). In this manner, by limiting the number of times of transmitting a print data request to the upper limit set in advance, the connection process load on the printing device can be reduced.

On the other hand, upon receiving print data (step S76) instead of receiving response data with a status code of the printing device "102 Processing" from the server device 5 in response to the print data request, the printing device 1 prints the received print data (step S77).

As described above, in the fourth embodiment, the network printing system is configured such that a printing device connected to a server device via a network generates, according to a print request, print request data including print attribute data for printing and transmits the print request data to the server device, the server device generates response data for the received print request data for transmission and also starts a print-data generation process, the printing device receives the response data and transmits a print data request, the server device transmits print data if generated, the printing device receives the print data for printing, and if unable to receive the print data, retransmits a print data request, and if the number of times of request has reached an upper limit, stops requesting. With this, reliable print data can be quickly obtained according to a user's request and can be printed conveniently and efficiently.

Next, a fifth embodiment according to the present invention is described.

The fifth embodiment is directed to a network printing system in which a printing device connected to a server device via a network generates print request data including print attribute data for printing and transmits the print request data to the server device, the server device receives the print request data and generates response data for transmission, the printing device receives the response data and waits, the server device generates print data and asynchronously transmits the print data, and then the printing device receives the print data for printing.

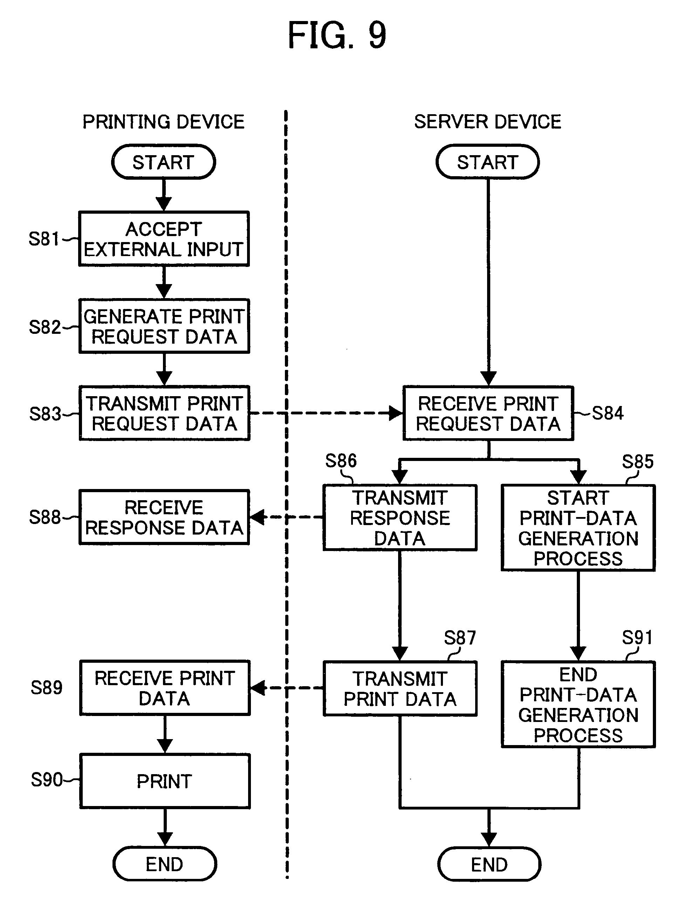

Fig. 9 is a flowchart of an operation procedure in the network printing system according to the fifth embodiment of the present invention. The basic structure of the network printing system according to the fifth embodiment is similar to that in the first embodiment. Components identical to those in the first embodiment are not described herein.

The function and operation of the network printing system configured as described above according to the fifth embodiment is described. According to the print request data, the server device asynchronously transmits print data during another connection. The response data may contain status data indicative of a state of print data generation. Also, the response data may contain data including a time required for the server device to generate print data. For example, the response data indicates (generating, 2s). Transmission of print request data and reception of response data in the printing device may be performed during the same connection (session). For example, in the case of HTTP, according to the print request data transmitted from the printing device, a response with a status code (200 OK) contained in a header portion and a state of print data generation (generating) contained in a body portion is returned from the server device.

With reference to Fig. 9, the operation procedure of the network printing system is described. Processes from steps S81 to S84 are performed in a manner similar to that for the processes from steps S21 to S24 in the second embodiment.

Upon receiving the print request data from the printing device 1 (step S84), the server device 5 starts generating print data (document1.ps) (step S85). Then, the following response-data transmission process is performed concurrently with a print-data generation process (steps S85 and S91). The server device 5 transmits response data containing the state of print data generation (generating) or a generation waiting time (2s) to the printing device 1 (step S86). Upon completion of generating print data (step S91), the server device 5 transmits the generated print data (document1.ps) to the printing device 1 (step S87).

Upon receiving the response data from the server device 5 (step S88), the printing device 1 waits for reception of print data according to the generation waiting time (2s) in the response data. The printing device 1 then asynchronously receives print data (document1.ps) during another connection (step S89), and then prints the received print data (step S90). In this manner, even if the size of the print data is large and generation at the server device takes a long time, the connection load exerted by the printing device on the server device can be reduced.

As described above, in the fifth embodiment, the network printing system is configured such that a printing device connected to a server device via a network generates print request data including print attribute data for printing and transmits the print request data to the server device, the server device receives the print request data and generates response data for transmission, the printing device receives the response data and waits, the server device generates print data and asynchronously transmits the print data, and then the printing device receives the print data for printing. With this, reliable print data can be quickly obtained according to a user's request and can be printed conveniently and efficiently.

Next, a sixth embodiment according to the present invention is described.

The sixth embodiment is directed to a network printing system in which a printing device connected to a server device and a content server device via a network generates, according to a print request, print request data including print attribute data for printing and transmits the print request data to the server device, the server device obtains content data from the content server device according to the received print request data, generates print data according to the print request data, and transmits the print data to the printing device, and then the printing device receives the print data for printing.

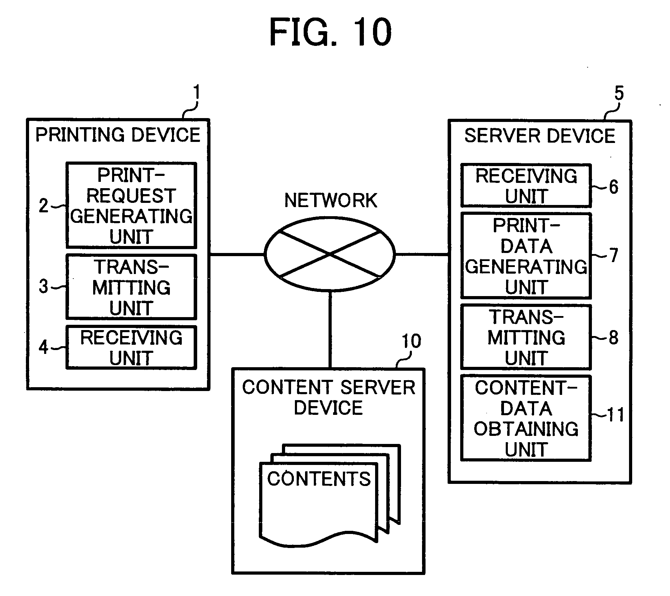

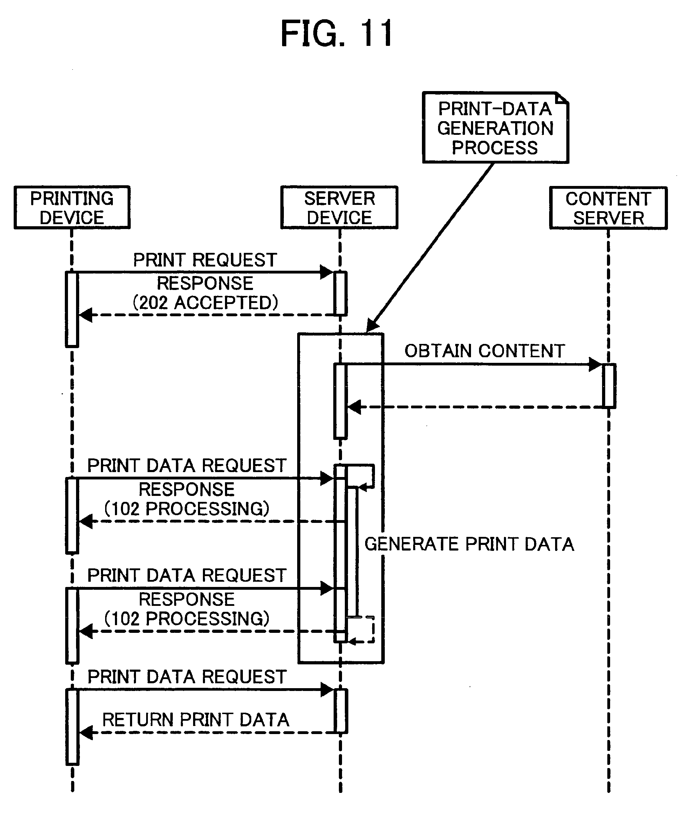

Fig. 10 is a diagram of the configuration of the network printing system according to the sixth embodiment of the present invention. The server device includes a content-data obtaining unit that obtains content data from a content server device via a network. In Fig. 10, a content server device 10 is a server device that supplies content data. A content-data obtaining unit 11 is a device that obtains content data from the content server device 10. Other than that, the basic structure of the network printing system according to the sixth embodiment is similar to that in the first embodiment. Components identical to those in the first embodiment are not described herein. Fig. 11 is a flowchart of an operation procedure when content data is obtained from the content server device and print data is asynchronously generated for transmission.

The function and operation of the network printing system configured as described above according to the sixth embodiment is described. The print-data generating unit 7 in the server device 5 generates print data from the obtained content data. The content data obtaining unit 11 obtains data via a network, such as a LAN, Wide Area Network (WAN), or the Internet, according the print request data. The content data is obtained based on HTTP, FTP, or others. For example, to specify content data of document1.doc in a path of documents in a server device of somewhere, the content data is specified in the form of an URL of http://somewhere/documents/document1.doc.

With reference to Fig. 11, the operation procedure of the network printing system is described. Operations identical to those in the first embodiment are not described herein. In the server device, a process of obtaining content data via a network is added to the print-data generation process. In the case of HTTP, documentl.doc in the path of documents in the server device of somewhere is obtained from the URL (http://somewhere/documents/document1.doc). From the obtained content, the print-data generating unit generates print data. When a print data request comes from the printing device during the print-data generation process, a response indicative of "processing" is returned. Upon completion of print data generation, the print data is returned to the printing device. By the server device obtaining print content via a network, even a content on the network can be printed according to a user's print request.

As described above, in the sixth embodiment, the network printing system is configured such that a printing device connected to a server device and a content server device via a network generates, according to a print request, print request data including print attribute data for printing and transmits the print request data to the server device, the server device obtains content data from the content server device according to the received print request data, generates print data according to the print request data, and transmits the print data to the printing device, and then the printing device receives the print data for printing. With this, reliable print data can be quickly obtained according to a user's request and can be printed conveniently and efficiently.

Next, a seventh embodiment according to the present invention is described.

The seventh embodiment is directed to a network printing system in which a printing device connected to a server device via a network generates, according to a print request, print request data including print attribute data for printing and transmits the print request data to the server device, the server device generates response data according to the received print request data for transmission and, upon completion of print-data generation, transmits a print-data-generation completion notification, the printing device transmits a print data request upon receiving the print-data-generation completion notification, the server device generates print data for transmission, and the printing device receives the print data for printing.

Other than that, the basic structure of the network printing system according to the seventh embodiment is similar to that in the first embodiment.

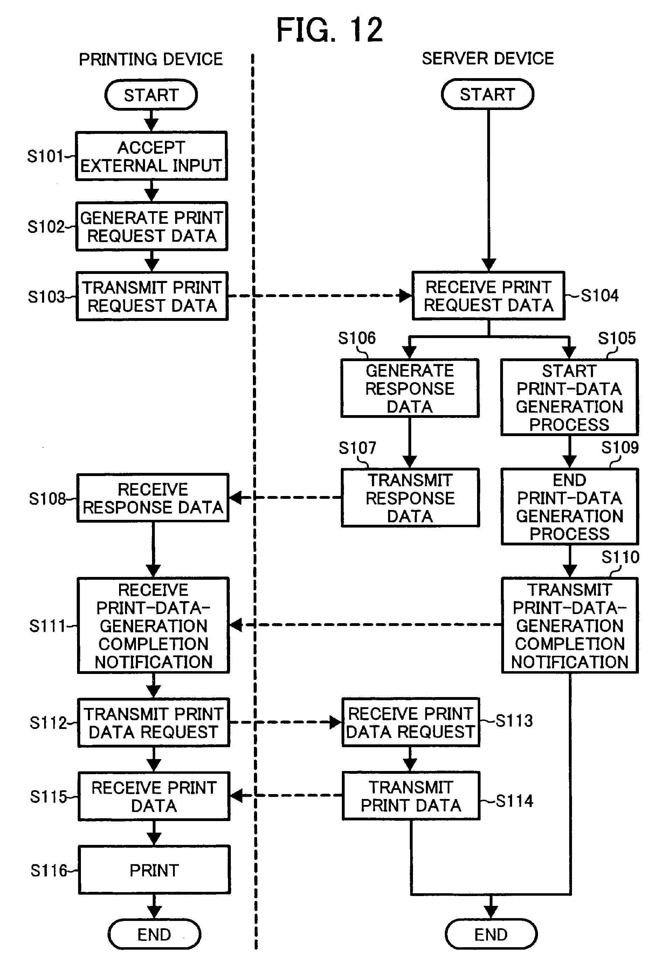

With reference to Fig. 12, the operation procedure of the network printing system is described. Processes from step S101 to step S104 are performed in a manner similar to that for the processes from steps S21 to S24 in the second embodiment.

Upon receiving the print request data from the printing device 1 (step S104), the server device 5 concurrently performs the following response-data generation process and print-data generation process.

First, in the response-data generation process, response data containing a URL (http://somewhere/documents/document1.ps) as identification information for print data (document1.ps) is generated (step S106), and then the generated response data is transmitted to the printing device 1 (step S107).

On the other hand, the server device 5 concurrently starts a print-data generation process (step S105).

The printing device 1 then receives the response data transmitted at step S107 from the server device 5 (step S108). The printing device 1 is then in a wait state for receiving a print-data-generation completion notification from the server device 5.

When the print-data generation process is completed to generate print data (step S109), the server device 5 transmits a print-data-generation completion notification to the printing device 1 (step S110).

Upon receiving the print-data-generation completion notification from the server device 5 (step 111), the printing device 1 transmits a print data request to the server device 5 to obtain document1.ps in the path of documents in the server device 5 of somewhere, from the URL (http://somewhere/documents/document1.ps) contained in the received response data (step S112). The subsequent processes (steps S113 to S116) are performed in a manner similar to that for the processes (steps S30 to S33) in the second embodiment.

In this manner, even if the size of the print data is large and its generation at the server device takes a long time, the print data can be obtained at a timing desired by the user, while avoiding a printing error due to the occurrence of a connection timeout and reliably waiting until the completion of print-data generation.

Here, in the first to seventh embodiments, the print request data containing content identification information, paper size, printing side, the number of sheets for printing, and whether to include advertisement is input from the cellular phone as an external input device. This is not meant to be restrictive. The print request data may be input from an operation panel on the printing device 1. In this case, a screen equivalent to that depicted in Fig. 3 can be displayed on a liquid-crystal display unit allowing a touch input on the operation panel, thereby allowing the user to provide inputs from such a screen.

The network printing system according to the present invention is best suited for a system in which, according to a print request issued by a user from a cellular phone, PDA, or RFID terminal, for example, a printing device obtains print data from a server device for printing.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. A network printing method to be executed in a network printing system with a printing device and a print-data generating device being connected via a network, the network printing method comprising:
in the printing device, according to an input print request, generating print request data including print attribute data for printing;
in the printing device, transmitting the print request data to the print-data generating device;
in the print-data generating device, receiving the print request data from the printing device;
in the print-data generating device, generating response data;
in the print-data generating device, transmitting the response data to the printing device during the same session of receiving the print request data;
in the printing device, receiving the response data for the print request data from the print-data generating device;
in the printing device, transmitting a print data request to the print-data generating device according to the response data;
in the print-data generating device, receiving the print data request from the printing device;
in the print-data generating device, generating print data according to the print data request;
in the print-data generating device, transmitting the generated print data to the printing device; and
in the printing device, receiving the print data returned from the print-data generating device for the print data request.

2. a network printing method according to claim 1, further comprising:
in the print-data generating device, upon receiving the print data request, determining whether the print data has been generated;
in the print-data generating device, when it is determined that the print data has been generated, transmitting the print data to the printing device;
in the print-data generating device, when it is determined that the print data has not been generated, transmitting a notification indicative of failure of obtaining the print data; and
in the printing device, upon receiving from the print-data generating device the notification indicative of failure of obtaining the print data after transmitting the print data request, transmitting the print data request again to the print data generating device.

3. A network printing method according to claim 2, further comprising:
in the printing device, determining whether the number times of receiving from the print-data generating device the notification indicative of failure of obtaining the print data has reached an upper limit value set in advance; and
in the printing device, when the number of times of receiving the notification indicative of failure of obtaining the print data has reached the upper limit value, stopping transmission of the print data request.

4. A network printing method according to claim 1, further comprising:
in the print-data generating device, obtaining content data via the network; and
in the print-data generating device, generating print data from the content data.

5. A network printing method according to claim 1, further comprising:
in the print-data generating device, upon generating the print data, transmitting a print-data-generation completion notification to the printing device; and
in the printing device, upon receiving the print-data-generation completion notification from the print-data generating device, transmitting the print data request to the print-data generating device.

6. A network printing method according to claim 1, wherein in the printing device, the print request is received through an input to any one of an infrared light-receiving unit, a wireless communication unit, and an RFID reading unit.

7. A network printing method according to claim 1, wherein in the printing device, the print request is received through an input from an operation display unit.

8. A computer program product executable by a computer and having a computer-readable recording medium including a plurality of instructions for printing data in a network printing system with a printing device and a print-data generating device being connected via a network, the instructions causing the computer to execute:
according to an input print request, generating print request data including print attribute data for printing;
transmitting the print request data to the print-data generating device;
receiving response data for the print request data from the print-data generating device;
transmitting a print data request to the print-data generating device according to the response data; and
receiving the print data returned from the print-data generating device for the print data request.

9. A computer program product executable by a computer and having a computer-readable recording medium including a plurality of instructions for printing data in a network printing system with a printing device and a print-data generating device being connected via a network, the instructions causing the computer to execute:
receiving print request data including print attribute data for printing from the printing device;
generating response data for the print request data;
transmitting the response data to the printing device during a same session of receiving the print request data;
receiving the print data request from the printing device;
generating print data according to the print data request; and
transmitting the generated print data to the printing device.
